(19) Europäisches Patentamt
European Patent Office
Office européen des brevets

(11) **EP 4 772 577 A1**

(12) **EUROPEAN PATENT APPLICATION**
published in accordance with Art. 153(4) EPC

(43) Date of publication:
**08.07.2026 Bulletin 2026/28**

(21) Application number: **24859743.7**

(22) Date of filing: **27.08.2024**

(51) International Patent Classification (IPC):
***C08L 65/00*** *(2006.01)* ***C08K 3/28*** *(2006.01)*
***C08K 5/17*** *(2006.01)* ***H01B 1/12*** *(2006.01)*

(52) Cooperative Patent Classification (CPC):
**C08K 3/28; C08K 5/17; C08L 65/00; H01B 1/12**

(86) International application number:
**PCT/JP2024/030420**

(87) International publication number:
**WO 2025/047711 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 JP 2023138088**

(71) Applicants:
- **Daihachi Chemical Industry Co., Ltd.**
  **Osaka-shi, Osaka 541-0053 (JP)**
- **The University of Osaka**
  **Osaka 565-0871 (JP)**
- **PUBLIC UNIVERSITY CORPORATION NAGOYA CITY UNIVERSITY**
  **Nagoya-shi, Aichi 467-8601 (JP)**

(72) Inventors:
- **KIRIYAMA, Kahori**
  **Higashiosaka-shi, Osaka 577-0056 (JP)**
- **HATAI, Tomohiro**
  **Higashiosaka-shi, Osaka 577-0056 (JP)**
- **HIRAO, Toshikazu**
  **Suita-shi, Osaka 565-0871 (JP)**
- **AMAYA, Toru**
  **Nagoya-shi, Aichi 467-8501 (JP)**

(74) Representative: **Johnson, Stephen William et al**
**Venner Shipley LLP**
**406 Cambridge Science Park**
**Milton Road**
**Cambridge CB4 0WW (GB)**

# (54) COMPOSITION FOR MOLDING CONDUCTIVE ARTICLE

(57) The present invention provides a composition for molding a conductive article having high electrical conductivity. Provided is a composition for molding a conductive article, the composition comprising a polythiophene compound represented by general formula (A), ammonia, and an amine compound. Also provided is a method for molding a conductive article using said composition. In general formula (A), L is an alkylene or the like. Each of $M^1$ and $M^2$ is independently an alkyl group or a hydrogen atom. $R^{1A}$ is a hydrogen atom, an alkyl group, an alkoxy group, an acyl group, or a group represented by formula (15). $L^1$, $M^{1c}$, and $M^{2c}$ are the same as L, $M^1$, and $M^2$, respectively.

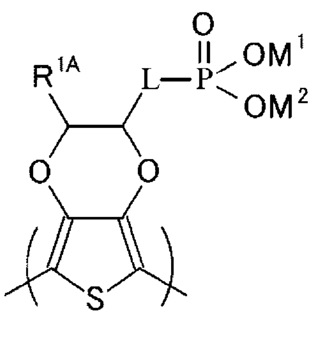

(A)

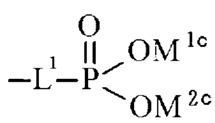

(15)

EP 4 772 577 A1

## Description

[Technical Field]

The present invention is directed to a composition for molding an electrically conductive article using a polythiophene compound, and a method of producing an electrically conductive article.

[Background Art]

As a polythiophene resin having electrical conductivity, Patent document 1 discloses a polythiophene compound having a phosphorous-based structural unit. However, in the field where various electrically conductive articles are used, there are cases where further higher electrical conductivity is considered as being preferable, and it is desired to develop a material having further higher electrical conductivity.

[Prior Art Document]

[Patent Document]

[Patent Document 1] International Publication WO2022/260007

[Summary of Invention]

[Problems to be solved by the invention]

A problem of the present invention is to provide a composition for molding an electrically conductive article having high electrical conductivity and a method of producing an electrically conductive article.

[Means for Solving the Problem]

As a result of diligent studies, the inventors have found that the above-described problem is achieved by using a composition comprising a specific base when a polythiophene compound is molded, and have completed the present invention.
Specifically, the present invention provides the following compositions, and the like.

(Item 1)

A composition which is used for molding an electrically conductive article, wherein the composition comprises a polythiophene compound, an amine compound and ammonia,

the polythiophene compound comprises a structural unit represented by the following general formula (A):

[Chemical formula 1]

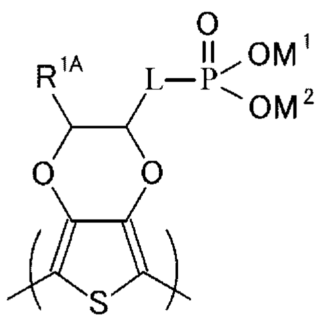

(A)

,

wherein,
L is represented by formula (21):

[Chemical formula 21]

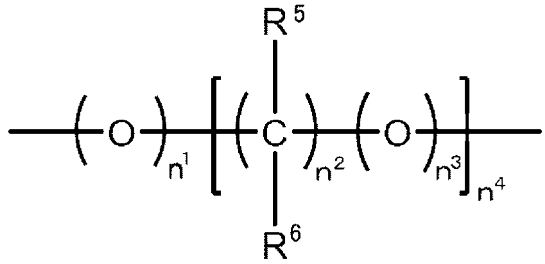

(21)

wherein $R^5$ is independently a hydrogen atom or a straight chain or branched chain alkyl group in which the number of carbon atoms is 1 to 5, $R^6$ is independently a hydrogen atom or a straight chain or branched chain alkyl group in which the number of carbon atoms is 1 to 5, $n^1$ is 0 or 1, $n^2$ is independently an integer from 1 to 6, $n^3$ is independently 0 or 1, $n^4$ is an integer from 0 to 12, and the left end of formula (21) is bound to the carbon atom in the dioxane ring in formula (A),
$M^1$ and $M^2$ are each independently an alkyl group in which the number of carbon atoms is 1 to 15, or a hydrogen atom,
$R^{12}$ is a hydrogen atom, an alkyl group, an alkoxy group, an acyl group, or a group represented by formula (15):

[Chemical formula 15]

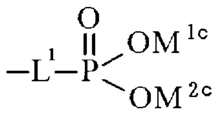

(15)

wherein $L^1$ is represented by formula (22):

[Chemical formula 22]

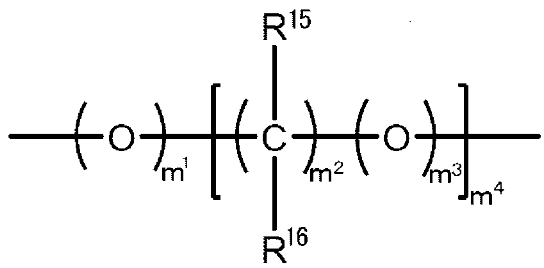

(22)

wherein $R^{15}$ is independently a hydrogen atom or a straight chain or branched chain alkyl group in which the number of carbon atoms is 1 to 5, $R^{16}$ is independently a hydrogen atom or a straight chain or branched chain alkyl group in which the number of carbon atoms is 1 to 5, $m^1$ is 0 or 1, $m^2$ is independently an integer from 1 to 6, $m^3$ is independently 0 or 1, $m^4$ is an integer from 0 to 12, and the left end of formula (22) is bound to the carbon atom in the dioxane ring in formula (A),
$M^{1c}$ and $M^{2c}$ are each independently an alkyl group in which the number of carbon atoms is 1 to 15, or a hydrogen atom,
the amine compound consists of a nitrogen atom(s), a carbon atom(s), and a hydrogen atom(s),
with the proviso that the electrically conductive article is not a member which is used in a capacitor.

(Item 2)

The composition of item 1, further comprising a solvent.

(Item 3)

The composition of item 1 or 2 (in one embodiment, the composition of item 1), wherein the amine compound has a straight chain or branched chain alkyl group in which the number of carbon atoms is 1 to 4.

(Item 4)

The composition of any one of items 1 to 3 (in one embodiment, the composition of item 1), wherein the amine compound has one to three nitrogen atom(s).

(Item 5)

The composition of any one of items 1 to 4 (in one embodiment, the composition of item 1), wherein the amine compound is selected from monoalkylamine, dialkylamine and trialkylamine, wherein the alkyl group in the amine compound is a straight chain or branched chain alkyl group in which the number of carbon atoms is 1 to 4.

(Item 6)

The composition of any one of items 1 to 5 (in one embodiment, the composition of item 1), wherein the amine compound is selected from monomethylamine, dimethylamine and trimethylamine.

(Item 7)

The composition of any one of items 1 to 6 (in one embodiment, the composition of item 1), wherein a molar ratio of the amine compound in the total amount of the amine compound and ammonia comprised in the composition is 1 mol% to 99 mol%.

(Item 8)

The composition of item 2, wherein the solvent is water.

(Item 9)

The composition of any one of items 1 to 8 (in one embodiment, the composition of item 1), wherein $R^{1A}$ in the polythiophene compound is hydrogen.

(Item 10)

The composition of any one of items 1 to 9 (in one embodiment, the composition of item 9), wherein $M^1$ and $M^2$ in the polythiophene compound are hydrogen.

(Item 11)

The composition of any one of items 1 to 10 (in one embodiment, the composition of item 9), wherein, in the polythiophene compound, $n^1$ is 0, $n^2$ is 1, $n^3$ is 0, and $n^4$ is 1.

(Item 12)

An electrically conductive article which has been molded using the composition of any one of items 1 to 11, which is not used as a member in a capacitor.

(Item 13)

An electrically conductive article which has been molded using the composition of any one of items 1 to 11, wherein the electrically conductive article is in a form of a film, with the proviso that the electrically conductive article is not used as a member in a capacitor.

(Item 14)

A method of manufacturing an electrically conductive article, comprising a step of preparing the composition of any one of items 1 to 11 and a step of molding the composition to obtain an electrically conductive article, with the proviso that the electrically conductive article is not a member that is used in a capacitor.

(Item 15)

The method of item 14, further comprising a step of polymerizing a monomer corresponding to the polythiophene compound comprised in the composition to obtain the polythiophene compound, wherein the step of obtaining the polythiophene compound is performed before the step of preparing the composition.

[Effect of Invention]

If the composition of the present invention is used and a polythiophene compound is molded, then an electrically conductive article having high electrical conductivity is obtained.

[Embodiments for Carrying Out the Invention]

The present invention is described in detail hereinafter.
The composition of the present invention comprises a polythiophene compound, amine compound and ammonia, and if necessary, further comprises a solvent.
As the polythiophene compound, for example, the polythiophene compound which is described in Patent document 1 can be used.

[Polythiophene compound]

The polythiophene compound is represented by, for example, the general formula (12):

$$-(A)_q- \qquad (12)$$

wherein A is each independently a thiophene monomer residue. q is the degree of polymerization, which is any positive integer. Specifically, q can be, for example, 3 or greater, 6 or greater, or 10 or greater, and q can be 2,000 or less, 1,000 or less, 800 or less, or 400 or less.
It should be noted that when the structure of a polythiophene compound is described as a general formula, both ends thereof are generally omitted. Thus, in the present specification, in principle, both ends are omitted when describing the structure of a polythiophene compound. However, if both ends of the aforementioned general formula (12) are described, it would result in, for example, the following general formula (12A):

$$E^1-(A)_q-E^2 \qquad (12A)$$

wherein each of $E^1$ and $E^2$ is an end group. Generally, one is a polymerization initiation end and the other is a polymerization termination end.
A polythiophene compound is preferably a homopolymer. However, a polythiophene compound may be a copolymer as needed. A copolymer may be a block copolymer or may be a random copolymer.
It should be noted that in the present specification, a unit constituting a repeat structure of a polymer is referred to as a structural unit. Specifically, "A" is a structural unit in the polymer of the above-described general formula (12A). The polymer is comprised of the structural units and the end groups. In other words, moieties other than the polymerization initiation end and the polymerization termination end of the polymer are comprised of the structural units. Thus, in the present specification, a description of "polythiophene compound does not comprise a structural unit other than general formula (A)" means that moieties other than the end groups are comprised of only the structural units of general formula (A).
The polythiophene compound of the present invention comprises a structural unit represented by the following general formula (A):

[Chemical formula 1]

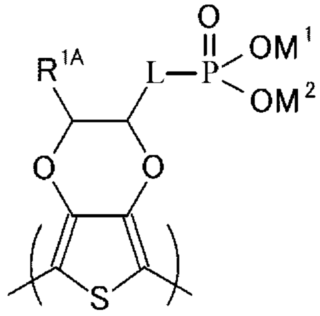

(A)

In general formula (A), L is represented by formula (21):

[Chemical Formula 21]

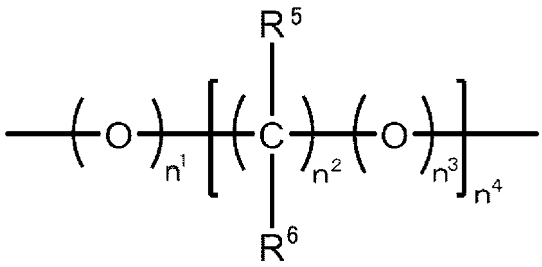

(21)

In this regard, $R^5$ is independently a hydrogen atom or a straight chain or branched chain alkyl group in which the number of carbon atoms is 1 to 5, preferably a hydrogen atom or an alkyl group in which the number of carbon atoms is 1 to 3, and more preferably a hydrogen atom.

$R^6$ is independently a hydrogen atom or a straight chain or branched chain alkyl group in which the number of carbon atoms is 1 to 5, preferably a hydrogen atom or an alkyl group in which the number of carbon atoms is 1 to 3, and more preferably a hydrogen atom.

$n^1$ is 0 or 1, and is preferably 0.

$n^2$ is independently an integer from 1 to 6, preferably 1 to 4, more preferably 1 to 2, and still preferably 1.

$n^3$ is independently 0 or 1, and preferably 0. If $n^3$ is 0, then $n^4$ is preferably 1 or 2, and $n^4$ is more preferably 1.

$n^4$ is an integer from 0 to 12, preferably 0 to 6, more preferably 1 or 2, and still preferably 1.

The product of $n^2$ and $n^4$ would be the total number of the carbon atoms between the dioxane ring and the phosphorous.

$$\text{(Number of the carbon atoms between the dioxane ring and the phosphorous)} = n^2 \times n^4$$

The number of the carbon atoms between the dioxane ring and the phosphorous is preferably 1 to 12, more preferably 1 to 9, still preferably 1 to 6, and particularly preferably 1 to 3. In one embodiment, the number of the carbon atoms is 1 or 2.

The left end of formula (21) is bound to the carbon atom in the dioxane ring in formula (A), and the right end of formula (21) is bound to the phosphorous atom in formula (A).

In one embodiment, $R^5$ and $R^6$ are hydrogen atoms, $n^1$ is 0, $n^3$ is 0, and $n^4$ is 1. In other words, in this embodiment, L is $-(CH_2)_{n2}-$, wherein $n^2$ is independently 0 to 12. $n^2$ is preferably 0 to 4, and more preferably 0 to 2. $n^2$ is particularly preferably 1.

$M^1$ and $M^2$ are each independently an alkyl group in which the number of carbon atoms is 1 to 15, or a hydrogen atom. In one preferred embodiment, at least one of $M^1$ and $M^2$ is a hydrogen atom. Still preferably, both $M^1$ and $M^2$ are hydrogen atoms.

In general formula (A), $R^{1A}$ is a hydrogen atom, an alkyl group, an alkoxy group, an acyl group, or a group represented by formula (15), preferably an alkyl group or a hydrogen atom, and still preferably a hydrogen atom.

[Chemical formula 15]

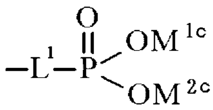 (15)

In the formula, $L^1$ is represented by formula (22):

[Chemical formula 22]

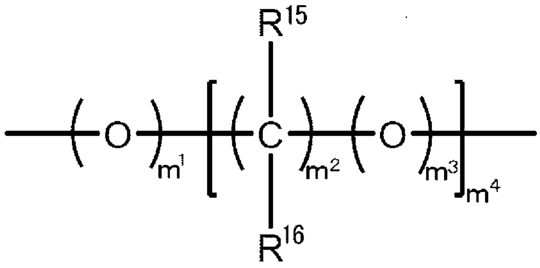 (22) .

In the formula, $R^{15}$ is independently a hydrogen atom or a straight chain or branched chain alkyl group in which the number of carbon atoms is 1 to 5, preferably a hydrogen atom or an alkyl group in which the number of carbon atoms is 1 to 3, and more preferably a hydrogen atom.

$R^{16}$ is independently a hydrogen atom or a straight chain or branched chain alkyl group in which the number of carbon atoms is 1 to 5, preferably a hydrogen atom or an alkyl group in which the number of carbon atoms is 1 to 3, and more preferably a hydrogen atom.

$m^1$ is 0 or 1, and is preferably 0.

$m^2$ is independently an integer from 1 to 6, preferably 1 to 4, more preferably 1 to 2, and still preferably 1.

$m^3$ is independently 0 or 1, and preferably 0. If $m^3$ is 0, then $m^4$ is preferably 1 or 2, and more preferably $m^4$ is 1.

$m^4$ is an integer from 0 to 12, preferably 0 to 6, more preferably 1 or 2, and still preferably 1.

The product of $m^2$ and $m^4$ is the total number of the carbon atoms between the dioxane ring and the phosphorous.

(Number of the carbon atoms between the dioxane ring and the phosphorous) = $m^2 \times m^4$

The number of the carbon atoms between the dioxane ring and the phosphorous is preferably 1 to 12, more preferably 1 to 9, still preferably 1 to 6, particularly preferably 1 to 3, and in one embodiment 1 or 2.

Further, the total of the number of carbon atoms between a dioxane ring and phosphorous in L and the number of carbon atoms between the dioxane ring and the phosphorous in $L^1$ is preferably 1 to 16, more preferably 1 to 12, still preferably 1 to 8, particularly preferably 1 to 4, and in one embodiment 1 or 2.

The left end of formula (22) is bound to the carbon atom in the dioxane ring in formula (A), and the right end of formula (22) is bound to a phosphorous atom in formula (15).

In one embodiment, $R^{15}$ and $R^{16}$ are hydrogen atoms, $m^1$ is 0, $m^3$ is 0, and $m^4$ is 1. In other words, in this embodiment, $L^1$ is $-(CH_2)_{m2}-$, wherein $m^2$ is independently 0 to 12. $M^{1c}$ and $M^{2c}$ are each independently an alkyl group in which the number of carbon atoms is 1 to 15, or a hydrogen atom.

It should be noted that in the present specification, a phosphoric acid or phosphonic acid moiety refers to a moiety having a structure of a phosphoric acid group or a derivative thereof (e.g., a salt or ester) or a phosphonic acid group or a derivative thereof (e.g., a salt or ester). For example, in the present specification, a moiety where $M^1$ and $M^2$ of general formula (A) is bound to a phosphoric acid group or a phosphonic acid group, and a moiety where $M^{1c}$ and $M^{2c}$ of formula (15) is bound to a phosphoric acid group or a phosphonic acid group are also referred to as a phosphoric acid or phosphonic acid moiety.

In general formula (A), alkyl groups in $R^{1A}$ may be each independently straight chain, branched chain, or cyclic. A cyclic alkyl group may be comprised of only a cyclic structure, or may have a structure in which a chain alkyl group is further bound to the cyclic structure. The number of carbon atoms in an alkyl group is preferably 1 to 15, still preferably 1 to 8, and particularly preferably 1 to 4. Specific examples thereof include a methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, and the like.

Alkoxy groups in $R^{1A}$ may be each independently straight chain, branched chain, or cyclic. A cyclic alkoxy group may be comprised of only a cyclic structure, or may have a structure in which a chain alkyl group and/or chain alkoxy group is further bound to the cyclic structure. The number of carbon atoms in an alkoxy group is preferably 1 to 15, still preferably 1 to 8, and particularly preferably 1 to 4. Specific examples thereof include a methoxy group, ethoxy group, propoxy group, butoxy group, pentyloxy group, hexyloxy group, heptyloxy group, octyloxy group, nonyloxy group, decyloxy group, undecyloxy group, dodecyloxy group, tridecyloxy group, tetradecyloxy group, pentadecyloxy group, and the like.

Acyl groups in $R^{1A}$ may be each independently straight chain, branched chain, or cyclic. A cyclic acyl group may be comprised of only a cyclic structure, or may have a structure in which a chain alkyl group and/or chain acyl group is further bound to the cyclic structure. The number of carbon atoms in acryl is preferably 1 to 15, still preferably 1 to 8, and particularly preferably 1 to 4. Specific examples thereof include an acetyl group, propionyl group, butanoyl group, pentanoyl group, hexanoyl group, heptanoyl group, octanoyl group, nonanoyl group, decanoyl group, undecanoyl group, dodecanoyl group, tridecanoyl group, tetradecanoyl group, pentadecenoyl group, and the like.

In one preferred embodiment, $R^{1A}$ is a hydrogen atom.

$M^1$ and $M^2$ may be the same or different from each other. In one preferred embodiment, $M^1$ and $M^2$ are the same. $M^{1c}$ and $M^{2c}$ may be the same or different from each other. In one preferred embodiment, $M^{1c}$ and $M^{2c}$ are the same.

In the above-described general formula (A), an alkyl group in $M^1$, $M^2$, $M^{1c}$ and $M^{2c}$ may be straight chain or branched chain, and the number of carbon atoms is preferably 1 to 12, still preferably 1 to 8, and particularly preferably 1 to 5. In a still preferred embodiment, the number of carbon atoms in an alkyl group is 2. A polythiophene compound having excellent electrical conductivity is obtained if the number of carbon atoms in an alkyl group is within a preferred range. Specific examples thereof include a methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, and the like.

In the above-described general formula (A), both $M^1$ and $M^2$ may be an alkyl group, but it is preferable that at least one is a hydrogen atom from the viewpoint of electrical conductivity. More preferably, both are hydrogen atoms. Further, both $M^{1c}$ and $M^{2c}$ may be an alkyl group, but it is preferable that at least one is a hydrogen atom from the viewpoint of electrical conductivity. More preferably, both are hydrogen atoms.

Specific examples of a structural unit of the above-described general formula (A) include the following formulas (9), (10), (11), (13), and the like.

[Chemical formula 9]

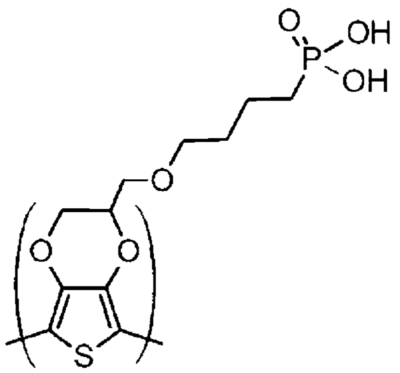

(9)

[Chemical formula 10]

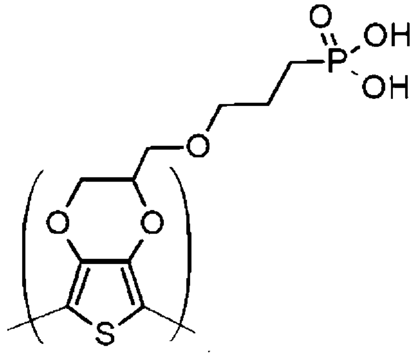

(10)

[Chemical formula 11]

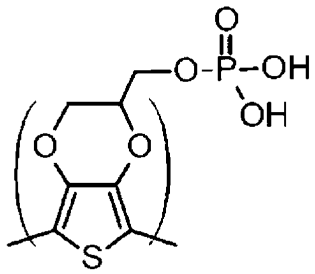

(1 1)

[Chemical formula 13]

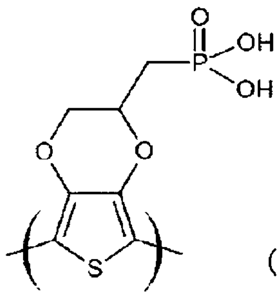

(1 3)

In one embodiment, a structural unit of the polythiophene compound used in the composition of the present invention may be comprised of only a structural unit of the above-described general formula (A). In one embodiment, the polythiophene compound used in the composition of the present invention is substantially free of a structural unit other than the structural unit of the above-described general formula (A). An advantageous property can be exerted at a high level if structural units of a polymer are comprised of only the structural unit of the above-described general formula (A).

Further, in another embodiment, the polythiophene compound used in the composition of the present invention may comprise a structural unit other than the structural unit of the above-described general formula (A) to the extent that the effect of the present invention is not inhibited.

However, if the content of structural units other than general formula (A) is too high, then the advantage of the present invention would be compromised. Thus, it is preferable that the content of structural units other than general formula (A) is not too high. The content of structural units other than general formula (A) is preferably 40 mol% or less, more preferably 30 mol% or less, still preferably 20 mol% or less, even more preferably 10 mol% or less, especially preferably 5 mol% or less, particularly preferably 3 mol% or less, and most preferably 1 mol% or less, with respect to the total structural units in a polythiophene compound. Further, the content can also be 0.1 mol% or less or can be 0.01 mol% or less.

An electrically conductive polythiophene compound having a self-doping property needs to have a hydrogen ion donating phosphoric acid or phosphonic acid moiety. A hydrogen ion donating phosphoric acid or phosphonic acid moiety refers to a phosphoric acid or phosphonic acid moiety in which there is at least one -P-OH group. Any number can be selected as the number of phosphorous-containing thiophene monomer residues comprising a hydrogen ion donating phosphoric acid or phosphonic acid moiety in the polythiophene compound used in the composition of the present invention. The ratio of phosphorous-containing thiophene monomer residues comprising a hydrogen ion donating phosphoric acid or phosphonic acid moiety can be selected from, for example, 10% or greater, 20% or greater, 30% or greater, 40% or greater, 50% or greater, 60% or greater, 70% or greater, 80% or greater, 90% or greater, or 95% or greater, when the total number of phosphorous-containing thiophene monomer residues which are present in the polythiophene compound is 100%. Alternatively, the ratio may be 100%. Further, when it is desirable to control the hydrogen ion donating group (-P-OH) content for some reason, a design can be implemented to control the number of hydrogen ion donating phosphoric acid or phosphonic acid moieties. In such a case, the ratio of phosphorous-containing thiophene monomer residues comprising a hydrogen ion donating phosphoric acid or phosphonic acid moiety can be designed to be, for example, 95% or less, 90% or less, 85% or less, 80% or less, 75% or less, or 70% or less, when the total number of phosphorous-containing thiophene monomer residues which are present in the polythiophene compound used in the composition of the present invention is 100%.

Further, the ratio of hydrogen ion donating phosphoric acid or phosphonic acid moieties to the total number of phosphoric acid or phosphonic acid moieties can be designed to be any ratio. The ratio of hydrogen ion donating phosphoric acid or phosphonic acid moieties can be selected from, for example, 10% or greater, 20% or greater, 30% or greater, 40% or greater, 50% or greater, 60% or greater, 70% or greater, 80% or greater, 90% or greater, or 95% or greater,

when the total number of phosphoric acid or phosphonic acid moieties which are present in the polythiophene compound used in the composition of the present invention is 100%. Alternatively, the ratio can be 100%. Further, when it is desirable to control the hydrogen ion donating group content for some reason, a design can be implemented to control the number of hydrogen ion donating phosphoric acid or phosphonic acid moieties. In such a case, the ratio of hydrogen ion donating phosphoric acid or phosphonic acid moieties can be designed to be, for example, 95% or less, 90% or less, 85% or less, 80% or less, 75% or less, or 70% or less, when the total number of phosphoric acid or phosphonic acid moieties which are present in the polythiophene compound used in the composition of the present invention is 100%.

The aforementioned ratio of hydrogen ion donating phosphoric acid or phosphonic acid moieties can be controlled by, for example, adjusting the type and amount of a thiophene compound used for the manufacture of a polythiophene compound.

The polythiophene compound used in the composition of the present invention can be manufactured by using the method described below.

(Molecular weight)

The molecular weight of the polythiophene compound used in the composition of the present invention is not particularly limited. The weight average molecular weight of the polythiophene compound used in the composition of the present invention is preferably 1,000 or greater, and more preferably 2,000 or greater. The weight average molecular weight of the polythiophene compound used in the composition of the present invention is preferably 500,000 or less, more preferably 200,000 or less, and still preferably 100,000 or less.

The polythiophene compound used in the composition of the present invention preferably comprises a monomer residue having a phosphoric acid or phosphonic acid structural moiety [$-OP(O)(OH)_2$ or $-P(O)(OH)_2$], or monoalkyl phosphate ester or monoalkyl phosphonate ester structural moiety [-OP(O)(OH)(OR) or -P(O)(OH)(OR), wherein R is an alkyl group in which the number of carbon atoms is 1 to 15]. A phosphoric acid or phosphonic acid structural moiety or monoalkyl phosphate ester or monoalkyl phosphonate ester structural moiety can perform doping to a thiophene ring of the polythiophene compound main chain by a hydrogen ion released from a hydrogen ion donating group (-P-OH) thereof.

In one embodiment of the present invention, a polythiophene compound having a specific absorbance ratio can be used. By a polythiophene compound having a specific absorbance ratio, high electrical conductivity is achieved. Specifically, in a polythiophene compound used in the composition of the present invention, the absorbance ratio calculated by the calculation formula ($A_{2000}/A_{407}$) from the absorbance of the compound at a wavelength of 2000 nm ($A_{2000}$) and the absorbance of the compound at a wavelength of 407 nm ($A_{407}$), measured using a spectrophotometer, is 1 or higher. The absorbance ratio is preferably 1.5 or higher, more preferably, 2 or higher, further preferably, 2.5 or higher, particularly preferably, 3 or higher. If necessary, the absorbance ratio may be 3.5 or higher, may be 4 or higher, or may be 4.5 or higher. There is no upper limit for the absorbance ratio. However, if necessary, an upper limit of the absorbance ratio can be set at, for example, 10 or lower, or 8 or lower, or 6 or lower. As a method for measuring absorbance, the method described in Patent document 1 can be used.

[Thiophene compound]

A phosphorous-containing thiophene compound is used as a monomer to manufacture a polythiophene compound used in the composition of the present invention.

[Phosphorous-containing thiophene compound]

A phosphorous-containing thiophene compound is a compound represented by the following general formula (Am):

[Chemical formula 2A]

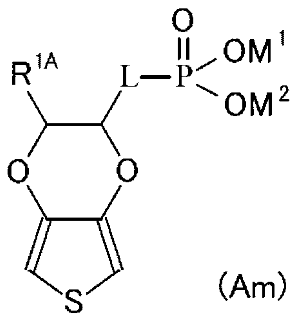

(Am)

In the above-described general formula (Am), L is represented by formula (21):

[Chemical formula 21]

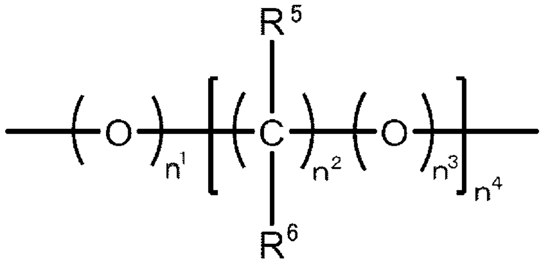

(21)

wherein $R^5$ is independently a hydrogen atom or a straight chain or branched chain alkyl group in which the number of carbon atoms is 1 to 5, $R^6$ is independently a hydrogen atom or a straight chain or branched chain alkyl group in which the number of carbon atoms is 1 to 5, $n^1$ is 0 or 1, $n^2$ is independently an integer from 1 to 6, $n^3$ is independently 0 or 1, $n^4$ is an integer from 0 to 12, and the left end of formula (21) is bound to the carbon atom in the dioxane ring in formula (Am).

In one embodiment, L is $-(CH_2)_n-$, wherein n is 0 to 12.

$M^1$ and $M^2$ are each independently an alkyl group in which the number of carbon atoms is 1 to 15, or a hydrogen atom.

$R^{1A}$ is a hydrogen atom, an alkyl group, an alkoxy group, an acyl group, or a group represented by formula (15):

[Chemical formula 15]

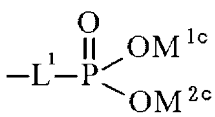

(15)

$L^1$ is represented by formula (22):

[Chemical formula 22]

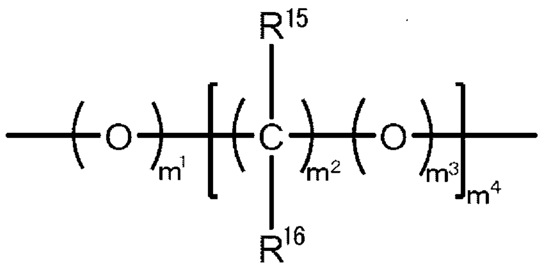

(22)

wherein $R^{15}$ is independently a hydrogen atom or a straight chain or branched chain alkyl group in which the number of carbon atoms is 1 to 5, $R^{16}$ is independently a hydrogen atom or a straight chain or branched chain alkyl group in which the number of carbon atoms is 1 to 5, $m^1$ is 0 or 1, $m^2$ is independently an integer from 1 to 6, $m^3$ is independently 0 or 1, $m^4$ is an integer from 0 to 12, and the left end of formula (22) is bound to the carbon atom in the dioxane ring in formula (Am).

In this regard, $M^{1c}$ and $M^{2c}$ are each independently an alkyl group in which the number of carbon atoms is 1 to 15, or a hydrogen atom.

An alkyl group in above-described $M^1$, $M^2$, $M^{1c}$ and $M^{2c}$ may be a straight chain alkyl group or a branched chain alkyl group. The number of carbon atoms is preferably 1 to 12, still preferably 1 to 8, and particularly preferably 1 to 5. The number of carbon atoms is most preferably 2. Specific examples thereof include a methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, and the like. Within the scope described above, progression of an oxidative polymerization reaction may be smooth to facilitate the polythiophene compound used in the composition of the present invention to be obtained.

In one embodiment, $M^1$ and $M^2$ are hydrogen atoms. If $M^1$ and $M^2$ are hydrogen atoms, then there is an advantage in that the manufacture of a polythiophene compound comprising a diacid form is facilitated. In polythiophene, a diacid form generally has higher electrical conductivity than a dialkyl form and a monoacid form. Therefore, it is advantageous that a polythiophene compound comprising a diacid form can be readily manufactured.

Further, in one embodiment, $M^{1c}$ and $M^{2c}$ are hydrogen atoms. If $M^{1c}$ and $M^{2c}$ are hydrogen atoms, then there is an advantage in that the manufacture of a polythiophene compound comprising a diacid form is facilitated.

$M^1$ and $M^2$ may be the same or different from each other. In one preferred embodiment, $M^1$ and $M^2$ are the same. $M^{1c}$ and $M^{2c}$ also may be the same or may be different from each other. In one preferred embodiment, $M^{1c}$ and $M^{2c}$ are the same.

If $M^1$ and $M^2$ are both alkyl, then a polythiophene compound having excellent electrical conductively may be obtained by hydrolyzing a compound obtained from oxidative polymerization of a monomer mixture comprising the thiophene compound described above.

Likewise, if $M^{1c}$ and $M^{2c}$ are both alkyl, then a polythiophene compound having excellent electrical conductively may be obtained by hydrolyzing a compound obtained from oxidative polymerization of a monomer mixture comprising the thiophene compound described above.

Alkyl groups in $R^{1A}$ may be straight chain, branched chain, or cyclic. A cyclic alkyl group may be comprised of only a cyclic structure, or may have a structure in which a chain alkyl group is further bound to the cyclic structure. The number of carbon atoms in an alkyl group is preferably 1 to 15, still preferably 1 to 8, and particularly preferably 1 to 4. Specific examples thereof include a methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, and the like.

Alkoxy groups in $R^{1A}$ may be straight chain, branched chain, or cyclic. A cyclic alkoxy group may be comprised of only a cyclic structure, or may have a structure in which a chain alkyl group and/or chain alkoxy group is further bound to the cyclic structure. The number of carbon atoms in an alkoxy group is preferably 1 to 15, still preferably 1 to 8, and particularly preferably 1 to 4. Specific examples thereof include a methoxy group, ethoxy group, propoxy group, butoxy group, pentyloxy group, hexyloxy group, heptyloxy group, octyloxy group, nonyloxy group, decyloxy group, undecyloxy group, dodecyloxy group, tridecyloxy group, tetradecyloxy group, pentadecyloxy group, and the like.

Acyl groups in $R^{1A}$ may be straight chain, branched chain, or cyclic. A cyclic acyl group may be comprised of only a cyclic structure, or may have a structure in which a chain alkyl group and/or chain acyl group is further bound to the cyclic structure. The number of carbon atoms in acryl is preferably 1 to 15, still preferably 1 to 8, and particularly preferably 1 to 4. Specific examples thereof include an acetyl group, propionyl group, butanoyl group, pentanoyl group, hexanoyl group, heptanoyl group, octanoyl group, nonanoyl group, decanoyl group, undecanoyl group, dodecanoyl group, tridecanoyl group, tetradecanoyl group, pentadecenoyl group, and the like.

In one preferred embodiment, $R^{1A}$ is an alkyl group or a hydrogen atom, and still preferably a hydrogen atom.

Specific examples of above-described general formula (Am) include the following formulas (5), (9B), (10B), (11C), and the like.

[Chemical formula 5]

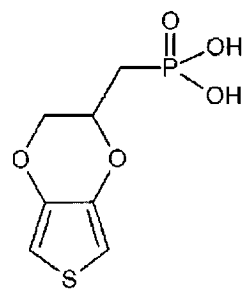

(5)

[Chemical formula 9B]

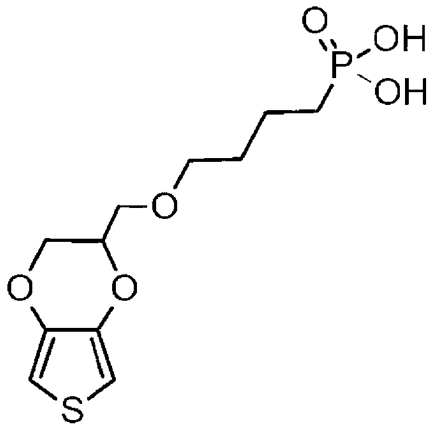

(9 B)

[Chemical formula 10B]

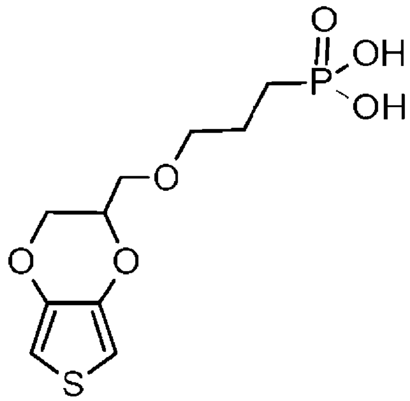

(1 0 B)

[Chemical formula 11C]

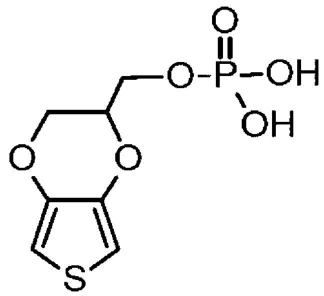

(1 1 C)

[Method of manufacturing a phosphorous-containing thiophene compound]

A phosphorous-containing thiophene compound used in the present invention can be manufactured, for example, by the following method when $R^{1A}$ is a hydrogen atom. In particular, the compound is preferably manufactured by the following first step and second step from the viewpoint of yield and operability.

(First step )

In the first step, a compound represented by the following general formula (3) is obtained by a known method.

[Chemical formula 3]

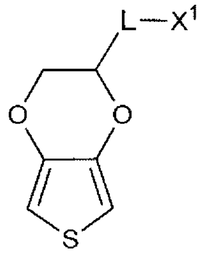

(3)

In formula (3), L is represented by formula (21):

[Chemical formula 21]

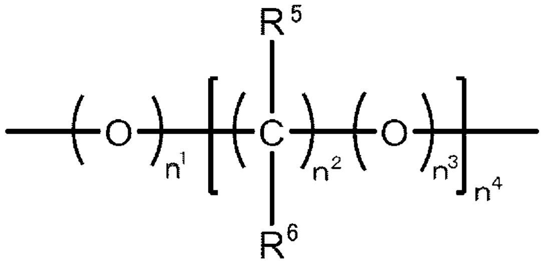

(21)

wherein $R^5$ is independently a hydrogen atom or a straight chain or branched chain alkyl group in which the number of carbon atoms is 1 to 5, $R^6$ is independently a hydrogen atom or a straight chain or branched chain alkyl group in which the number of carbon atoms is 1 to 5, $n^1$ is 0 or 1, $n^2$ is independently an integer from 1 to 6, $n^3$ is independently 0 or 1, $n^4$ is an integer from 0 to 12, and the left end of formula (21) is bound to the carbon atom in the dioxane ring in formula (3).

In one embodiment, L is $-(CH_2)_n-$, wherein n is 0 to 12. n is preferably 0 to 4, more preferably 0 to 2, and particularly preferably 1. $X^1$ is a halogen atom, such as a fluorine atom, a chlorine atom, a bromine atom, or an iodine atom. A chlorine atom or a bromine atom is preferable in view of the availability and operability of raw material.

Specifically, a compound wherein L is $-(CH_2)_n-$ in above-described formula (3) can be obtained by, for example, the method described in Japanese Laid-Open Publication No. 2014-74007.

In addition, an embodiment of n = 1, i.e., a compound represented by the following general formula (3A), can be obtained by a method of heating 3-halogenated-1,2-propanediol and 3,4-dimethoxythioiphene in the presence of an acidic catalyst.

[Chemical formula 3A]

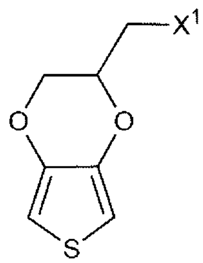

(3A)

Examples of the above-described acidic catalyst include sulfuric acid, para-toluenesulfonic acid monohydrate, methanesulfonic acid, and the like. The acidic catalyst is preferably para-toluenesulfonic acid monohydrate.

A compound wherein L is not $-(CH_2)_n-$ in the above-described formula (3) can also be obtained by a method similar to the method described above.

(Reaction temperature)

The above-described heating is performed for progressing the reaction. The heating temperature is not particularly limited, as long as a reaction progresses at a suitable rate, but is preferably 60°C or higher, still preferably 70°C or higher, and particularly preferably 80°C or higher. The temperature is preferably 200°C or lower, still preferably

150°C or lower, and particularly preferably 120°C or lower.

(Reaction period of time)

The period of time of the heating described above is not particularly limited. A sufficient period of time for a starting material to react may be appropriately selected under each condition. If a reaction progresses sufficiently, then a difference in reaction period of time would not significantly affect the effect of the present invention. For example, the reaction period of time is preferably 1 hour or more, and more preferably 3 hours or more. The reaction period of time is preferably 2 days or less, and more preferably 1 day (24 hours) or less.

(Solvent)

A solvent may be used as needed in the first step. A solvent is not particularly limited, as long as the solvent is not reactive in an oxidative polymerization reaction. Examples thereof include: aromatic hydrocarbons such as benzene, toluene, xylene, and mesitylene; aliphatic hydrocarbons such as n-hexane, cyclohexane, n-octane, and n-decane; halogenated hydrocarbons such as dichloromethane, dichloroethane, chloroform, carbon tetrachloride, chlorobenzene, and o-dichlorobenzene; ethers such as tetrahydrofuran, diethyl ether, t-butyl methyl ether, dimethoxyethane, dioxane, and diethylene glycol dimethyl ether; and the like. A solvent is preferably xylene, toluene, or diethylene glycol dimethyl ether, and still preferably xylene or toluene.

(Purification)

A product obtained in the first step may be used in the second step without performing a post-process such as purification. Further, a purified product obtained by purifying the product obtained in the first step by a known method may be used in the second step as needed.

(Second step)

In the second step, a compound represented by the above-described general formula (3) is reacted with tris(trialkylsilyl)phosphite or trialkylphosphite to replace $X^1$ in the compound represented by general formula (3) with a bis(trialkylsilyl)phosphonate moiety or phosphonate diester moiety. When synthesizing thiophene comprising a phosphonic acid moiety, i.e., a diacid form, a method using tris(trialkylsilyl)phosphite is preferable in terms of the efficiency of a reaction, and the like.

Tris(trialkylsilyl)phosphite is represented by the following general formula (11A):

[Chemical formula 11A]

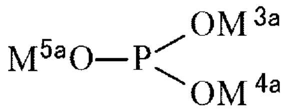

(11A)

wherein $M^{3a}$, $M^{4a}$, and $M^{5a}$ are each independently trimethylsilyl, triethylsilyl, tert-butyldimethylsilyl, or triisopropylsilyl, preferably trimethylsilyl or triethylsilyl, and still preferably trimethylsilyl. $M^{3a}$, $M^{4a}$, and $M^{5a}$ may be independently selected, but are preferably the same. Specific examples thereof include, for example, tris(trimethylsilyl)phosphite, tris(triethylsilyl) phosphite, and the like.

For example, heating a mixture of a compound represented by the above-described general formula (3) and tris(trialkylsilyl)phosphite causes a Michaelis-Arbuzov rearrangement reaction to occur. A compound of general formula (2A) is obtained as a rearranged product thereof.

[Chemical formula 2A]

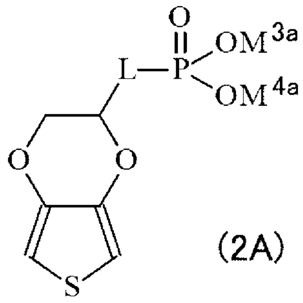

(2A)

In the formula, $M^{3a}$ and $M^{4a}$ are each independently trimethylsilyl, triethylsilyl, tert-butyldimethylsilyl, or triisopropylsilyl, which are generally used as a protecting group of a hydroxyl group. A compound of the following general formula (2C) can be obtained by performing deprotection by a known method.

For example, a basic aqueous solution such as an aqueous solution of sodium carbonate, potassium carbonate, or ammonia is allowed to act on a compound of the above-described general formula (2A), and thereby deprotection occurs.

[Chemical formula 2C]

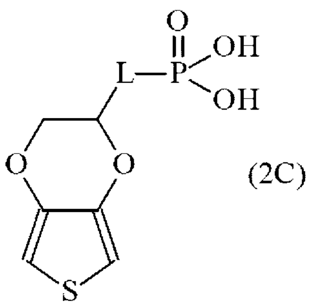

(2C)

While the compound of the above-described general formula (2C) can be obtained by hydrolyzing general formula (2B) described below by a known method, the compound can be relatively readily obtained by a method using the tris(trialkylsilyl)phosphite described above.

Trialkylphosphite is represented by the following general formula (11B):

[Chemical formula 11B]

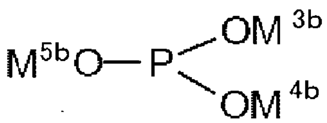

(11B)

wherein $M^{3b}$, $M^{4b}$, and $M^{5b}$ are each independently alkyl in which the number of carbon atoms is 1 to 15. The number of carbon atoms is preferably 1 to 12, still preferably 1 to 8, and particularly preferably 1 to 5. In a still preferred embodiment, the number of carbon atoms of an alkyl group is 2. $M^{3b}$ and $M^{4b}$ are the same as $M^1$ and $M^2$ in general formula (Am), respectively. $M^{3b}$ and $M^{4b}$ are selected in accordance with $M^1$ and $M^2$ of interest in the compound of general formula (Am). $M^{3b}$ and $M^{4b}$ may be the same or may be different. While $M^{5b}$ may be independently selected from $M^1$ and $M^2$ of interest in the compound of general formula (Am), it is preferable that $M^{5b}$ is the same as either $M^{3b}$ or $M^{4b}$. In one preferred embodiment, $M^{3b}$, $M^{4b}$, and $M^{5b}$ are the same. Specific examples thereof include, for example, trimethylphosphite, triethylphosphite, and the like.

For example, heating a mixture of the compound represented by the above-described general formula (3) and trialkylphosphite causes a Michaelis-Arbuzov rearrangement reaction to occur. A compound of general formula (2B) is obtained as a rearranged product thereof.

[Chemical formula 2B]

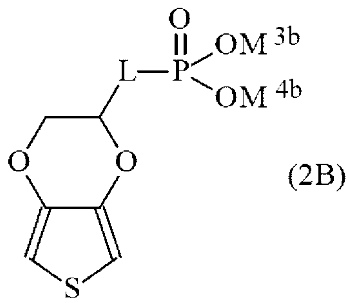

(2B)

In the formula, $M^{3b}$ and $M^{4b}$ are each independently alkyl in which the number of carbon atoms is 1 to 15.

The mixing ratio (molar ratio) of the compound represented by general formula (3) and trialkylphosphite or tris(trialkylsilyl)phosphite is not particularly limited. However, from the viewpoint of yield, and the like, the mixing ratio (molar ratio) of the compound represented by general formula (3) and trialkylphosphite or tris(trialkylsilyl)phosphite is preferably 0.8 mole or greater and more preferably 1 mole or greater of trialkylphosphite or tris(trialkylsilyl)phosphite with respect to 1 mole of the compound represented by general formula (3). Further, trialkylphosphite or tris(trialkylsilyl) phosphite is preferably 10 mole or less, still preferably 5 mole or less, and particularly preferably 3 mole or less with respect to 1 mole of the compound represented by general formula (3).

(Reaction temperature)

The heating described above is performed for progressing a reaction. The temperature at the time of a reaction is not particularly limited, as long as a reaction progresses at a suitable rate, but is preferably 100°C or higher, still preferably 110°C or higher, and particularly preferably 120°C or higher. Further, the temperature is preferably 220°C or lower, still preferably 200°C or lower, and particularly preferably 160°C or lower.

(Reaction period of time)

The period of time of the heating described above is not particularly limited. A sufficient period of time for a reaction material to react under conditions such as a temperature may be appropriately selected. If a reaction progresses sufficiently, then a difference in reaction periods would not significantly affect the effect of the present invention. The reaction period of time is preferably 6 hours or more, and more preferably 12 hours or more. Further, the reaction period of time is preferably 3 days or less, and more preferably 2 days or less.

(Solvent)

A solvent may be used as needed in the second step. A solvent is not particularly limited, as long as the solvent is a liquid that is not reactive in the second step and is capable of dissolving or dispersing a reaction material. Examples thereof include: aromatic hydrocarbons such as benzene, toluene, xylene, and mesitylene; aliphatic hydrocarbons such as n-hexane, cyclohexane, n-octane, and n-decane; halogenated hydrocarbons such as dichloromethane, dichloroethane, chloroform, carbon tetrachloride, chlorobenzene, and o-dichlorobenzene; ethers such as tetrahydrofuran, diethyl ether, t-butyl methyl ether, dimethoxyethane, dioxane, and diethylene glycol dimethyl ether; and the like. A solvent is preferably toluene, xylene, or diethylene glycol dimethyl ether, and still preferably xylene or toluene.

(Hydrolysis)

A compound of general formula (2B) obtained through the reaction described above may be subjected to hydrolysis or ion exchange as needed.

For example, a compound of general formula (2B) obtained through the reaction described above may be subjected to hydrolysis as needed. A compound of general formula (2B) may be subjected to hydrolysis and then additionally subjected to ion exchange. A compound wherein $M^{3b}$ and $M^{4b}$ are a hydrogen atom, an alkali metal, or the like in general formula (2B) can be obtained by performing hydrolysis of a compound of general formula (2B). Further, the type of $M^{3b}$ and $M^{4b}$ can be converted to a desired type by further performing ion exchange.

Various known methods can be used as a method of hydrolysis. In addition, the methods and conditions for the hydrolysis of a polythiophene compound described below can be used.

Various known methods can be used as a method of ion exchange. In addition, the methods and conditions for the ion exchange of a phosphorous-containing thiophene copolymer described below can be used.

(Purification)

A product obtained in the second step may be used in a polymerization step as a phosphorous-containing thiophene compound without performing a post-process such as purification. Alternatively, a post-process such as purification by a known method may be performed.

(Manufacturing method in the cases where $R^{1A}$ is other than a hydrogen atom)

A phosphorous-containing thiophene compound can be manufactured by a method that is basically similar to the method described above, even if $R^{1A}$ is other than a hydrogen atom.

If $R^{1A}$ is a group of formula (15), a phosphorous-containing thiophene compound can be manufactured by, for example, the following method.

(First step)

In the first step, a diol of general formula (17A) and 3,4-dialkoxythiophene of general formula (18) are reacted to obtain an intermediate represented by general formula (19A) through the following reaction.

[Chemical formula 17A]

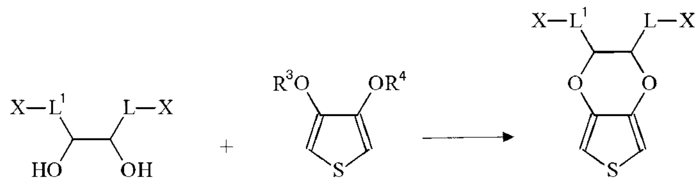

(17A) (18) (19A)

In the formula, $R^3$ and $R^4$ are alkyl groups (e.g., methyl group).

If, for example, L and $L^1$ are $-(CH_2)-$, then 1,4-dihalogenated-2,3-butanediol is used as a compound of formula (17A) instead of 3-halogenated-1,2-propanediol described above.

A compound wherein L and $L^1$ in formula (19A) are other than $-(CH_2)-$ can be obtained by a method that is similar to the method described above.

(Second step)

A phosphorous-containing thiophene compound of general formula (Am) is obtained by reacting the intermediate of general formula (19A) obtained in the first step with a compound of general formula (11A) using the method described above and performing deprotection, or by reacting the intermediate of general formula (19A) with a compound of general formula (11B) using the method described above.

[Chemical formula 2A]

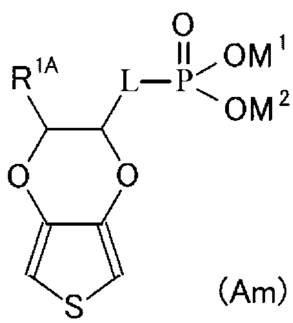

(Am)

In the formula, $R^{1A}$ is a group represented by the following general formula (15).

[Chemical formula 16]

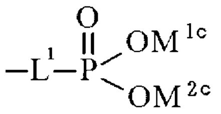

(15)

The mixing ratio of the intermediate and the phosphite is preferably 1.6 mole or greater and more preferably 2 mole or greater of phosphite to 1 mole of the intermediate. Further, the mixing ratio of the phosphite is preferably 20 mole or less, still preferably 10 mole or less, and particularly preferably 6 mole or less to 1 mole of the intermediate.

If $R^{1A}$ is a hydrogen atom, an alkyl group, an alkoxy group, or an acyl group, then a phosphorous-containing thiophene compound can be manufactured by, for example, the following method.

(First step)

In the first step, a diol of general formula (17B) and 3,4-dialkoxythiophene of general formula (18) are reacted to obtain an intermediate represented by general formula (19B) through the following reaction:

[Chemical formula 17B]

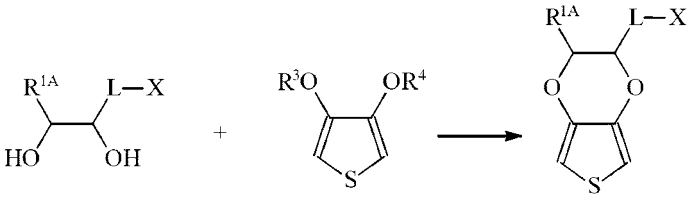

(17B) (18) (19B)

(Second step)

A phosphorous-containing thiophene compound of general formula (Am) is obtained by reacting the intermediate of general formula (19B) obtained in the first step with a compound of general formula (11A) through the method described above and performing deprotection, or by reacting the intermediate of general formula (19B) with a compound of general formula (11B) through the method described above.

[Chemical formula 2A]

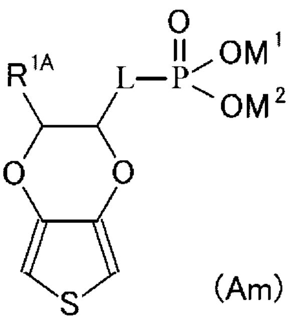

(Am)

In the formula, $R^{1A}$ is a hydrogen atom, an alkyl group, an alkoxy group, or an acyl group.

[Method of manufacturing a polythiophene compound]

The polythiophene compound used in the composition of the present invention is obtained by subjecting the phosphorous-containing thiophene compound described above to oxidative polymerization by using a suitable oxidizing agent and performing a suitable purification step. A method that is conventional and known as an oxidative polymerization method for polymerizing a thiophene compound can be used as a method of the oxidative polymerization. Manufacture under the conditions described below is preferable from the viewpoint of yield and operability.

It should be noted that in the present specification, "oxidative polymerization" refers to a reaction of polymerizing

a thiophene monomer compound or thiophene monomer mixture by using an oxidizing agent to synthesize a polythiophene compound. In this regard, "oxidation" refers to removing hydrogen atoms at positions 2 and 5 from a thiophene monomer compound in the polymerization reaction. In the present specification, "oxidizing agent" refers to a reagent inducing such an oxidation reaction. An oxidative polymerization reaction of thiophene monomers is described in, for example, above-described Patent document 1, and the like. It should be noted that the term oxidative polymerization is described in Encyclopaedia Chimica as "A process where a compound having a hydrocarbon residue comprising a double bond contacts oxygen and is gradually polymerized; the best example is drying of oil and fat". However, polymerization of a thiophene monomer generally does not use oxygen in the air as an oxidizing agent. Thus, in this regard the term "oxidative polymerization" in the present specification has a slightly different meaning from the meaning used in the Encyclopaedia Chimica, and the like.

(Monomer)

A polythiophene compound comprising a structural unit of the above-described general formula (A) can be obtained by performing oxidative polymerization using the phosphorous-containing thiophene compound of the above-described general formula (Am) as a monomer for polymerization.

It should be noted that when performing oxidative polymerization, the oxidative polymerization may be performed by using only one type of thiophene compound of general formula (Am) or may be performed by using two or more types of thiophene compounds of general formula (Am).

However, if the amount of a monomer other than that of general formula (Am) is too high, then the advantage of the present invention would be compromised. Thus, it is preferable that the amount of a monomer other than that of general formula (Am) is not too high. The amount of a monomer other than that of general formula (Am) is preferably 40 mol% or less, more preferably 30 mol% or less, still preferably 20 mol% or less, even more preferably 10 mol% or less, especially preferably 5 mol% or less, particularly preferably 3 mol% or less, and most preferably 1 mol% or less, with respect to the total amount of monomers used in the polymerization reaction.

(Oxidizing agent)

The oxidative polymerization reaction in the present invention is performed in the presence of an oxidizing agent. As the oxidizing agent, an oxidizing agent that is generally used for an oxidative polymerization reaction of a thiophene compound can be used. Specific examples thereof include ammonium persulfate, ferric chloride, ferric para-toluenesulfonate, ferric sulfate, ferric nitrate, and the like.

An oxidizing agent comprising an iron atom can be preferably used. More preferred examples include ferric chloride, ferric para-toluenesulfonate, ferric sulfate, and ferric nitrate.

Two or more types of the oxidizing agents described above may be used concomitantly. When using two or more types of the oxidizing agents concomitantly, it is preferable to use an oxidizing agent comprising an iron atom as one of the two or more types. Specifically, a preferred combination for concomitant use is a combination of ferric sulfate and ammonium persulfate.

The amount of oxidizing agent used is not particularly limited, as long as an oxidative polymerization reaction progresses satisfactorily. The amount is preferably 1 equivalent or more, still preferably 2 equivalents or more, and particularly preferably 3 equivalents or more with respect to a monomer used in an oxidative polymerization reaction. Further, the amount is preferably 100 equivalents or less, still preferably 60 equivalents or less, and particularly preferably 20 equivalents or less.

A reaction progresses smoothly if the amount used is within the range described above.

It should be noted that oxygen in the air generally would not be an oxidizing agent for polymerization of a thiophene monomer. Thus, even when a polymerization reaction is performed in the presence of air, oxygen in the air is generally not included in the amount of an oxidizing agent used in a polymerization reaction. In other words, the term "oxidative polymerization" is sometimes used to refer to a polymerization reaction using oxygen that is present in the air as an oxidizing agent, but the polymerization reactions in the present invention differ from such a polymerization reaction.

(Solvent)

The polymerization reaction of the present invention may use a solvent as needed.

A solvent is not particularly limited, as long as the solvent is a liquid that is capable of dissolving or dispersing a reaction material. Specific examples of the solvent include: water; aqueous solutions such as ammonia water, hydrochloric acid; alcohols such as methanol, ethanol, 1-propanol, 2-propanol; aromatic hydrocarbons such as benzene, toluene, xylene; ketones such as acetone, 2-butanone; halogenated hydrocarbons such as methylene chloride, chloroform, chlorobenzene; acetonitrile; dimethylacetamide; dimethylformamide; dimethyl sulfoxide; tetrahydrofuran; and the like.

The solvent is preferably water, ammonia water, hydrochloric acid, methanol, ethanol, dimethylformamide, dimethyl sulfoxide, acetonitrile, acetone, tetrahydrofuran, or toluene, and still preferably water, methanol, acetonitrile, dimethylformamide, or dimethyl sulfoxide.

For the solvents described above, one type of solvent may be used alone, or two or more types may be mixed and used. A mixed solvent prepared by mixing two or more types of solvents is preferable.

(Reaction temperature)

The reaction temperature during polymerization is not particularly limited. The temperature is preferably -20°C or higher, further preferably -15°C or higher, and particularly preferably -10°C or higher. The temperature is also preferably 80°C or lower, and still preferably 60°C or lower, and particularly preferably 40°C or lower.

(Reaction period of time)

For the reaction period of time of polymerization in the present invention, a period of time that is sufficient for a reaction under each condition may be appropriately selected. If a reaction progresses sufficiently, then a difference in reaction period of time would not significantly affect the effect of the present invention.

The reaction period of time is preferably 1 hour or more, more preferably 3 hours or more, still preferably 6 hours or more, even more preferably 9 hours or more, particularly preferably 12 hours or more, and if necessary it can be 15 hours or more, 18 hours or more, 21 hours or more, or 24 hours or more. Further, the reaction period of time is preferably 7 days or less, more preferably 5 days or less, still preferably 3 days or less, even more preferably 2 days or less, particularly preferably 36 hours or less, and if necessary it can be 30 hours or less, 28 hours or less, or 26 hours or less.

(Hydrolysis)

A polythiophene compound obtained through a polymerization reaction may be subjected to hydrolysis as needed. A phosphoric acid or phosphonic acid structural moiety [$-OP(O)(OH)_2$ or $-P(O)(OH)_2$], monoalkyl phosphate ester or monoalkyl phosphonate ester structural moiety [-OP(O)(OH)(OR) or -P(O)(OH)(OR), wherein R is an alkyl group in which the number of carbon atoms is 1 to 15], or monohydrogen phosphate or monohydrogen phosphonate structural moiety [$-OP(O)(OH)(OM^6)$ or $-P(O)(OH)(OM^6)$, wherein $M^6$ is an alkali metal, an alkaline earth metal, or an ammonium group] can be obtained by degrading an ester bond of an alkyl phosphate ester moiety or alkyl phosphonate ester moiety in the polythiophene compound by performing hydrolysis.

Hydrolysis can be performed through, for example, a method of treatment with a strong acid or a method of treatment with a strong alkali, or the like. For example, hydrolysis can be performed through a method of heating in an acidic aqueous solution or an alkaline aqueous solution, or the like. Examples of strong acid include protonic acids such as hydrochloric acid, sulfuric acid; Lewis acids such as trimethylsilyl bromide; and the like. Examples of strong alkali include potassium hydroxide, sodium hydroxide, and the like. In this regard, when a Lewis acid is used, for example, a method of reacting with a Lewis acid and then reacting with water, or the like can be preferably used. Alkali treatment is preferable from the viewpoint of stability of a polythiophene compound main chain.

When heating is performed at the time of hydrolysis, the temperature is not particularly limited. The temperature is preferably 30°C or higher, and more preferably 50°C or higher. Further, the temperature is preferably 100°C or lower, and more preferably 90°C or lower.

The period of time of performing hydrolysis is not particularly limited. The period of time is preferably 1 hour or more, and more preferably 6 hours or more. Further, the period of time is preferably 4 days or less, and more preferably 2 days or less.

A polythiophene compound obtained by performing hydrolysis may be further subjected to ion exchange as needed to adjust the amount of hydrogen ion donating phosphoric acid or phosphonic acid structural moieties.

(Purification)

A polythiophene compound obtained from a polymerization reaction is subjected to a suitable purification operation. Any method known as a purification method of polythiophene compounds can be used as the purification operation. For example, an operation such as centrifugation, filtration, dehydration, drying, washing, ultrafiltration, or dialysis can be performed. The number and type of purification operations are not particularly limited. While a purification operation may be completed by performing one type of purification operation once, the purification operation may be performed twice or more as needed. For example, a purification operation may be performed three times or more, four times or more, or five times or more. In this regard, one type of purification operation may be repeated twice or more, or a plurality of types of purification operations may be combined to perform a purification operation twice or more times in total.

While the number of times a purification operation is performed does not particularly have an upper limit, the number is preferably 20 times or less, more preferably 15 times or less, and still preferably 10 times or less. If the number is too high, then the entire manufacturing process would take a long period of time, so that the efficiency of manufacture would decrease.

In a preferred embodiment of the present invention, a chelate compound is used to perform purification. A resin having high electrical conductivity is obtained by performing purification using a chelate compound. In the present specification, a chelate compound refers to a compound having a plurality of ligands. As a method of purification using a chelate compound, any method that can contact a polythiophene compound with a chelate compound can be used. A method that can contact a polythiophene compound with a chelate compound in a liquid is preferred. In one embodiment, purification of a polythiophene compound can be performed by adding a solvent and a chelate compound to the polythiophene compound and stirring the mixture. A preferred solvent is water. The temperature at which purification is performed is not particularly limited. The temperature may be room temperature or a heated temperature. The temperature is preferably a temperature at which a mixture comprising a polythiophene compound and a chelate compound at the time of performing purification can be maintained in a state of a liquid.

Any conventional and known chelate compound can be used as a chelate compound. The chelate compound is preferably a chelate compound comprising a phosphorous atom and an oxygen atom, and more preferably a compound having a plurality of (e.g., two) phosphonic acid structural moieties ($-P(=O)(OH)_2$). For example, a bisphosphonate can be used. Particularly preferable specific examples thereof include etidronic acid.

(Ion exchange)

A polythiophene compound obtained through a polymerization reaction may be optionally subjected to ion exchange to adjust the amount of doping. Ion exchange can be performed with an acidic aqueous solution, ion exchange resin, or the like.

Specifically, when the amount of a hydrogen ion donating group of phosphoric acid or phosphonic acid, monoalkyl phosphate or monoalkyl phosphonate, or monohydrogen phosphate or monohydrogen phosphonate of a polythiophene compound obtained by polymerization is less than a desired amount as the entire polymer, ion exchange of a metal ion or ammonium ion bound to phosphoric acid or phosphonic acid to a hydrogen ion can be performed to increase the effect of doping.

Further, in contrast, when the amount of a hydrogen ion donating group of phosphoric acid or phosphonic acid, monoalkyl phosphate or monoalkyl phosphonate, or monohydrogen phosphate or monohydrogen phosphonate of a polythiophene compound obtained by polymerization is greater than the desired amount as the entire polymer, ion exchange of a hydrogen ion of phosphoric acid or phosphonic acid, monoalkyl phosphate or monoalkyl phosphonate, or monohydrogen phosphate or monohydrogen phosphonate to other ion (e.g., alkali metal ion, ammonium ion, or the like) can be performed to decrease the effect of doping.

Ion exchange can be performed after polymerizing a polythiophene compound. Ion exchange can be performed simultaneously with the above-described purification operation, can be performed before the purification operation, or can be performed after the purification operation. For example, when purification is performed by filtration, ion exchange can be performed simultaneously with purification through filtration if an ion exchange resin has been loaded into a column used for performing the filtration.

As the ion exchange method, a conventional and known ion exchange method can be used.

If, for example, an acidic aqueous solution is used, then ion exchange can be performed by contacting a polythiophene compound product obtained by polymerization with an acidic aqueous solution. Specifically, ion exchange can be performed, for example, by a method such as stirring a polythiophene compound product in an acidic aqueous solution and reacting a moiety of a salt of a phosphoric acid or phosphonic acid salt compound that is present in the polythiophene compound product with a hydrogen ion in an aqueous solution. When increasing hydrogen ions to increase the effect of doping, it is preferable to use an excessive amount of an acid with respect to an acidic substituent of a polythiophene compound product. In order to decrease the effect of doping, the amount of an acid used may be decreased. In other words, the effect of doping can be set to any level based on the amount of an acid used. Further, the period of time during which a polythiophene compound product and an acid are reacted can also be set to any period of time.

If, for example, an ion exchange resin is used, ion exchange can be performed by a method such as contacting a polythiophene compound product with the ion exchange resin in water. When increasing hydrogen ions in order to increase the effect of doping, it is preferable to use a strongly acidic cation exchange resin. When decreasing hydrogen ions in order to decrease the effect of doping, it is preferable to use a strongly basic cation exchange resin. Any method can be used as a method of contacting a polythiophene compound product with an ion exchange resin. For example, a column may be filled with an ion exchange resin to have a solution comprising a polythiophene compound product flow therein, or an ion exchange resin may be simply placed in a container and a solution comprising a polythiophene compound product may be placed in the container. Further, when contacting a polythiophene compound product with an ion exchange resin,

the container thereof may be shaken, or the solution may be stirred to improve the efficiency thereof. The period of time during which a polythiophene compound product and ion exchange resin are contacted can be set to any period of time. If, for example, a small amount (e.g., one droplet) of polythiophene compound product solution is allowed to flow into a column, the period of time is set as a period from when the small amount of solution has contacted the top portion of an ion exchange resin to when the solution leaves from the bottom portion of the ion exchange resin. If, for example, a large amount of polythiophene compound production solution is allowed to flow into a column, then the period of time is set as the average of a period from when the first portion of the solution contacts the top portion of an ion exchange resin to when the first portion leaves the bottom portion of the ion exchange resin and a period from when the last portion of the solution contacts the top portion of the ion exchange resin to when the last portion leaves the bottom portion of the ion exchange resin. Further, when an ion exchange resin and a polythiophene compound product solution are placed in a container, the period of time is set as a period during which the solution and the ion exchange resin are mixed in the container.

The period of time for performing a single operation of ion exchange on a polythiophene compound product (e.g., period of time of contact between the polythiophene compound product and the acidic aqueous solution or period of time of contact between the ion exchange resin and the polythiophene compound product described above) is set to any period of time in accordance with the desired degree of ion exchange. For example, the period of time is preferably 5 seconds or more, more preferably 10 seconds or more, even more preferably 1 minute or more, and still preferably 10 minutes or more. If the contact period of time is too short, then ion exchange tends to be insufficient. Further, the period is preferably 1 day or less, more preferably 12 hours or less, and still preferably 2 hours or less. If the contact period of time is too long, then the entire manufacturing process would take a long period of time, so that the efficiency of manufacture would decrease.

The number of times ion exchange operations are performed is not particularly limited. While ion exchange may be completed by performing an ion exchange operation once on a polythiophene compound product, the ion exchange operation may be repeatedly performed twice or more. If repeated two or more times, then a polythiophene compound having a high doping effect can be readily obtained. Specifically, the operation is preferably repeated three times or more, more preferably repeated four times or more, and still preferably repeated five times or more. Further, the number of times an ion exchange operation is performed is preferably 20 times or less, more preferably 15 times or less, and still preferably 10 times or less. If the number is too high, then the entire manufacturing process would take a long period of time, so that the efficiency of manufacture would decrease.

Further, when performing an ion exchange operation two or more times, the same ion exchange operation may be repeated twice or more times, or two or more types of ion exchange operations may be performed.

In one preferred embodiment, an ion exchange operation can be combined with a purification operation as a series of steps. For example, a polymer having high doping efficiency and high purity can be obtained by adding an acidic aqueous solution to a polythiophene compound product, performing ion exchange thereon, then performing a purification step (e.g., centrifugation) on the polythiophene compound product to remove water, and the like, and retrieving a polythiophene compound wherein the purity is increased. Further, a series of steps wherein an ion exchange operation is combined with a purification operation can be one cycle, and the cycle can be repeated a plurality of times. For example, a polymer having very high doping efficiency and high purity can be efficiently obtained by repeating a series of steps of adding an acidic aqueous solution to a polythiophene compound product, performing ion exchange thereon, then performing a purification step (e.g., centrifugation) on the polythiophene compound product, retrieving a polythiophene compound wherein the purity is increased, adding again an acidic aqueous solution to the polythiophene compound after the first purification, performing the second ion exchange, then performing a purification step again, and retrieving a polythiophene compound after the second purification having further improved purity. In other words, a polymer having high purity and high electrical conductivity can be efficiently obtained. The number of times a cycle consisting of a series of steps comprising an ion exchange operation and a purification operation is repeated is not particularly limited. Specifically, the cycle is preferably repeated three times or more, more preferably repeated four times or more, and still preferably repeated five times or more. Further, the cycle is repeated preferably 20 times or less, more preferably 15 times or less, and still preferably 10 times or less. If the number is too high, then the entire manufacturing process would take a long period of time, so that the efficiency of manufacture would decrease.

(Amine compound)

As the amine compound comprised in the composition of the present invention, an amine compound which consists of a nitrogen atom(s), a carbon atom(s) and a hydrogen atom(s) can be used. The number of the nitrogen atom(s) in the amine compound is preferably 5 or less, more preferably 3 or less, further preferably 2 or less, and particularly preferably one. The number of the carbon atom(s) in the amine compound is preferably 15 or less, more preferably 12 or less, further preferably 9 or less, and particularly preferably 6 or less. Further, a compound whose number of carbon atom(s) is 5 or less may be selected, a compound whose number of carbon atom(s) is 4 or less may be selected, and a compound whose number of carbon atom(s) is 3 or less may be selected.

The amine compound may be a compound which consists of a nitrogen atom(s) and a hydrocarbon group(s), may

be a compound which consists of a nitrogen atom(s), a hydrogen atom(s) and a hydrocarbon group(s), and can be a compound having a ring structure (heterocyclic structure) which consists of a nitrogen atom(s) and a carbon atom(s). Further, the heterocyclic structure may be an aliphatic ring structure, or may be an aromatic ring structure. The hydrocarbon group may be an aliphatic hydrocarbon group, or may be an aromatic hydrocarbon group. That is, the amine compound may be an aliphatic amine, or may be an aromatic amine. However, the amine compound is preferably an aliphatic amine.

The aliphatic amine may be a primary amine, may be a secondary amine, or may be a tertiary amine. The number of the carbon atoms in the alkyl group in the aliphatic alkylamine is preferably 1 to 12, more preferably 1 to 6, further preferably 1 to 4. In one embodiment, the number is 1 to 2, and in one embodiment, the number is 1. Examples of the primary amine include monoalkylamine (for example, monomethylamine, monoethylamine, monopropylamine and monobutylamine). Examples of the secondary amine include dialkylamine (for example, dimethylamine, diethylamine, dipropylamine and dibutylamine). Examples of the tertiary amine include trialkylamine (for example, trimethylamine, triethylamine, tripropylamine and tributylamine). Examples of the aromatic amine include aniline, toluidine, and xylidine. Examples of the aliphatic compound having a ring structure which consists of a nitrogen atom(s) and a carbon atom(s) include piperidine, pyrrolidine, and the like. Examples of the aromatic compound having a ring structure which consists of a nitrogen atom(s) and a carbon atom(s) include pyridine, picoline, lutidine, collidine, imidazole, 4-dimethylaminopyridine, and the like.

The composition of the present invention comprises at least one type of the above-described amine compounds, and can comprise two or more types of the above-described amine compounds.

(Solvent)

The composition of the present invention comprises a solvent if necessary. The solvent may be an inorganic solvent or may be an organic solvent. A solvent which can dissolve an amine compound and ammonia is preferable. In one preferable embodiment, the solvent is water. Since ammonia is a gas at room temperature, if it is dissolved in a solvent (for example, water) to form an ammonia solution (for example, aqueous ammonia solution) and it is used, then, the operation of mixing with a polythiophene compound is made easy. Further, when a compound which is a gas at room temperature is also used as an amine compound, if it is dissolved in a solvent (for example, water) to form an amine compound solution (for example, an aqueous amine compound solution) and it is used, then the operation of mixing with a polythiophene compound is made easy. When a compound which is a liquid at room temperature is used as an amine compound, then it is possible that ammonia is dissolved in the amine compound and the solution is used. When a compound which is a gas at room temperature is used as an amine compound, then it is preferable to dissolve the amine compound in a solvent (for example, water) and to use the solution.

(Preparation of composition)

The composition of the present invention can be prepared by mixing a polythiophene compound, an amine compound, ammonia, and if necessary a solvent. The order of mixing is not particularly limited.

If a solvent is used in the composition of the present invention, then, in one embodiment, a polythiophene compound and a solvent are mixed to form a mixture, an amine compound is dissolved in a solvent to form an amine compound solution, ammonia is dissolved in a solvent to form an ammonia solution, and thereafter, the mixture, the amine compound solution, and the ammonia solution are mixed. The order of mixing is not particularly limited. It is possible that an ammonia solution is added to a mixture of a polythiophene compound and a solvent and thereafter an amine compound solution is added. It is possible that an amine compound solution is added to a mixture of a polythiophene compound and a solvent and thereafter an ammonia solution is added. It is possible that an amine compound solution and an ammonia solution are simultaneously added to a mixture of a polythiophene compound and a solvent. Further, it is possible that an amine compound solution and an ammonia solution are mixed to prepare a mixed solution in advance and it is added to a mixture of a polythiophene compound and a solvent.

(pH of the composition)

If water is used in the composition as a solvent, then pH of the composition is preferably 7 or higher, more preferably 8 or higher, and further preferably 9 or higher. In addition, pH is preferably 12 or lower, more preferably 11 or lower, and further preferably 10 or lower. When pH is too high or too low, then there may be cases where it is difficult to obtain a desired shape at the time of molding.

(Mixing ratio)

A molar ratio of an amine compound in the total amount of an amine compound and ammonia comprised in the composition of the present invention is preferably 1 mol% or higher, more preferably 5 mol% or higher, further preferably 10 mol% or higher, and particularly preferably 15 mol% or higher, and if necessary, also it can be 20 mol% or higher. Further, a molar ratio of an amine compound is preferably 99 mol% or lower, more preferably, 95 mol% or lower, and further preferably, 90 mol% or lower. A possible range of a molar ratio of an amine compound includes, for example, 1 mol% to 99 mol%, and also the range can be 5 mol% to 99 mol%, 10 mol% to 95 mol%, 15 mol% to 95 mol%, or 20 mol% to 90 mol%. If a ratio of an amine compound is too low or too high, the effect of improving electrical conductivity may be lowered.

(Other additives)

The composition of the present invention may comprise other additives to the extent that the effect of the invention is not deteriorated. Other additives include additives commonly used in this technical field, such as basic compounds, for example, amine compounds other than those described above and metal hydroxides, dopants such as polystyrene sulfonic acid, and the like.

(Method of producing an electrically conductive article)

In one aspect, the present invention is directed to a method of producing an electrically conductive article. This method comprises a step of preparing the above-described composition and a step of molding the composition. In one embodiment, before the step of preparing the composition, a step of polymerizing a monomer corresponding to the polythiophene compound is performed to obtain the polythiophene compound as a solid polymer. By conducting the molding step, the shape of the solid polymer becomes a shape which is desired for an electrically conductive article. It should be noted that in the present specification, "a monomer corresponding to a polythiophene compound" means a monomer in the case where the relationship of the polythiophene compound and the monomer is a relationship wherein the polythiophene compound is obtained when the monomer is polymerized.

(Molding step)

The composition of the present invention is used in a step of molding an electrically conductive article. As a step of molding, any known methods of molding an electrically conductive article can be used. Specifically, a polythiophene compound obtained by performing a polymerization usually cannot be used as an electrically conductive article in its as-obtained shape. Therefore, methods of performing molding to process into a desired shape (for example, a film) are known. In the known molding methods, the composition of the present invention can be used. In the present specification, a step of processing a polythiophene compound obtained by polymerization into a desired shape is described as a molding step. Further, the methods in the case where the desired shape is a film, that is, a step of processing a polythiophene compound obtained by polymerization into a shape of a film is described as a film-forming step. For example, a film can be formed by coating the composition of the present invention onto a smooth surface of a substrate and drying it.

(Electrically conductive article)

In one aspect, the present invention is directed to an electrically conductive article which is obtained by molding the above-described composition for molding. The electrically conductive article which is obtained by molding the above-described composition for molding has a high electrical conductivity. It is considered that a higher electrical conductivity is obtained by a synergistic action to the polythiophene compound by the amine compound and ammonia at the time of molding.

Depending on the purpose, a molded electrically conductive article can be used as a final product, or can be used as an intermediate product. For example, a film obtained by molding can be used as a final product of an antistatic film. When the article is used as an intermediate product, then, for example, a further processing step such as connecting to another part is performed to manufacture a final product.

(Impossible or impractical circumstances)

In the electrically conductive article which is obtained by molding the composition of the present invention, it is impossible to measure the presence of both of the amine compound or a substance derived from the amine compound and the ammonia or a substance derived from the ammonia by usual analysis technology. Theoretically, if a special analytical apparatus is used and analysis is conducted over an extremely long period of time by expending a large amount of a cost

which is significantly exceeding an amount what can be spent in research and development of general companies, then there is a possibility that the amount of each of an amine compound or a substance derived from the amine compound and ammonia or a substance derived from the ammonia which are present in the electrically conductive article can be confirmed. However, due to the first-to-file principle adopted by the Patent Law, there is a need to file an application urgently. Therefore, it is impossible to conduct analysis over an extremely long period of time. Furthermore, within a range of costs that a company can expend on the research and development in view of the common sense, it is impossible to confirm the amount of each of an amine compound or a substance derived from the amine compound and ammonia or a substance derived from the ammonia. Consequently, regarding the electrically conductive article obtained by using and molding the composition of the present invention, there is an impossible or impractical circumstance in relation to directly identifying the structure.

(Application)

An electrically conductive article which is molded by using the composition of the present invention can be used in various applications which are conventionally known as applications of an electrically conductive polythiophene compound. That is, the electrically conductive article can be used for any electrically conductive articles which are manufactured by using an electrically conductive polymer. Specific examples of applications of the electrically conductive article include, for example, antistatic agents, transparent electrodes, organic thin film solar cells (for example, hole transport layer), organic ELs, secondary batteries, static preventing agents, solar cells, electrode materials for plastic electrodes, EMI materials, organic ferromagnets, electrochromic materials, and various sensors (for example, touch sensors, etc.). The electrically conductive article can be a member in a capacitor, while in one embodiment, the electrically conductive article is an electrically conductive article other than a member in a capacitor.

(Antistatic agent)

As a method of using the electrically conductive article which is molded using the composition of the present invention for an antistatic agent, various known methods wherein a conventional electrically conductive polythiophene compound has been used for an antistatic agent can be used. For example, the composition of the present invention is coated onto a substrate and is dried, and thereby an electrically conductive film is formed on the substrate and an antistatic action is imparted to the surface of the substrate. Examples of a substrate include any solid substance for which an antistatic action is desired. Specific examples thereof include, for example, polymer films, polymer fibers, polymer resin molded articles, and the like.

As a coating method for the polythiophene compound of the present invention, any method used as a method for coating a substrate with a conventional polythiophene compound can be used. Specific examples thereof include, for example, spin coating, dip coating, and the like.

(Solar cell)

In one embodiment, an electrically conductive article which is molded using the composition of the present invention can be used as a material for a solar cell. The electrically conductive article which is molded using the composition of the present invention can be used, for example, for a hole transport layer in a solar cell.

As a method of manufacturing a solar cell, a conventional and known method of manufacturing a solar cell can be used. For example, a method of laminating each layer constituting a solar cell can be used. More specifically, a method comprising a step of forming a hole transport layer comprising a material comprising the polythiophene compound of the present invention and a step of forming other layers constituting a solar cell, or the like can be used. As a material forming a hole transport layer, the composition of the present invention may be used and can be molded into a desired shape (for example, a thin film).

[Examples]

The present invention is described hereinafter with reference to the Examples, but the present invention is not limited in any manner by the Examples.

Production Example 1 (synthesis of a thiophene monomer)

Using the method described in Example 3 of Paragraph 0145 of Japanese Patent Publication No. 6912060, a thiophene monomer represented by the following formula (5) was obtained.

[Chemical formula 5]

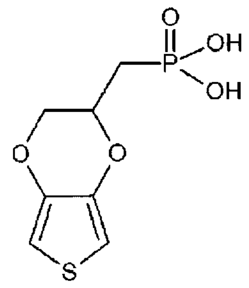

(5)

Polymer Preparation Example A (Synthesis of polythiophene compound, polymer A)

A mixed solution in which 0.3 g (1.27 mmol) of the thiophene monomer obtained in Production Example 1, 2.86 g (5.08 mmol) of iron(III) sulfate nonahydrate and 4.6 ml of dilute sulfuric acid were added was stirred at 5°C ± 5°C for 7 hours. Hydrochloric acid was added to the resulting mixture, the precipitated solid was removed, washed with acetone, and thereafter dried under reduced pressure, and thereby a black-blue solid was obtained.

12 ml of water and 20 ml of 2M etidronic acid were added to the obtained black-blue solid. It was stirred at room temperature (20°C to 25°C) for 2 hours. Thereafter, the filtered solid was washed with acetone and dried under reduced pressure, and thereby 0.26 g of the polythiophene compound represented by the following formula (6) was obtained. The polymer obtained in this Preparation Example is hereinafter referred to as "Polymer A".

[Chemical formula 6]

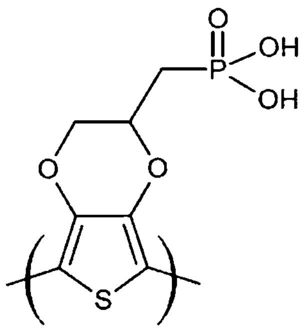

(6)

Polymer Preparation Example B (Synthesis of polythiophene compound, polymer B)

A mixed solution in which 7 g (29.6 mmol) of thiophene monomer obtained in Production Example 1, 66.7 g (119 mmol) of iron(III) sulfate nonahydrate, and 121 ml of water were added was stirred at 5°C ± 5°C for 7 hours. Hydrochloric acid was added to the resulting mixed solution. The precipitated solid was removed, washed with acetone, and dried under reduced pressure, and thereby a black-blue solid was obtained.

280 ml of water and 463 ml of 2M etidronic acid were added to the obtained black-blue solid. It was stirred for 2 hours at room temperature (20°C to 25°C). Thereafter, the filtered solid was washed with acetone and dried under reduced pressure, and thereby 6.0 g of a polythiophene compound was obtained. The chemical formula of this polythiophene compound is identical to the above-described formula (6). The polymer obtained in this Preparation Example is hereinafter referred to as "Polymer B".

(Example 1)

(Production of an aqueous solution)

An ammonia aqueous solution comprising ammonia and a base-comprising aqueous solution comprising trimethylamine (TMA) were prepared. These aqueous solutions were added to a mixture of 20 mg of the polythiophene compound (polymer A) and water, such that a molar ratio of ammonia and trimethylamine (TMA) is 10:90, and pH is 9 to 10, and a total 1 ml of an aqueous solution for forming a film was produced.

(Forming a film of an electrically conductive polymer)

A circular frame having a diameter of 1 cm was produced on an alkali-free glass substrate using a polyimide tape. This was used as a substrate for tests. 20 μL of the aforementioned aqueous solution for forming a film was used, and a thin film was produced within the circular frame on the substrate for tests by the drop-cast method. It was then heated on a hot plate and dried.

(Measurement of electrical conductivity)

The electrical conductivity was calculated from the following formula, with a surface resistance value measured through the 4-point probes method using a low resistivity meter (Nittoseiko Analytech Co., Ltd., LORESTA-GX MCP-T700) and the film thickness measured using a film thickness meter (Mitsutoyo, High-Accuracy Digimatic Micrometer MDH-25MB).

$$\text{Electrical conductivity (S/cm)} = 1/(\text{surface resistance value } (\Omega/\square) \times \text{film thickness (cm)})$$

The results are shown in Table 1.

(Examples 2 to 5)

Base-comprising aqueous solutions were prepared similarly to Example 1, except that the molar ratios of ammonia and trimethylamine (TMA) were changed as shown in Table 1. Aqueous solutions for forming a film were produced similarly to in Example 1, thin films were produced, and the electrical conductivity was measured.

(Comparative Example 1)

An aqueous solution for forming a film was produced similarly to Example 1, except that a base-comprising aqueous solution comprising only trimethylamine (TMA) was prepared. A thin film was produced, and the electrical conductivity was measured.

(Comparative Example 2)

An aqueous solution for forming a film was produced similarly to Example 1, except that a base-comprising aqueous solution comprising only ammonia was prepared. A thin film was produced, and the electrical conductivity was measured.

[Table 1]

| | | Comparative Example 1 | Example 1 | Example 2 | Example 3 | Example 4 | Example 5 | Comparative Example 2 |
|---|---|---|---|---|---|---|---|---|
| Polymer | | A | A | A | A | A | A | A |
| Base | Ammonia | | 10 | 30 | 50 | 70 | 80 | 100 |
| | TMA | 100 | 90 | 70 | 50 | 30 | 20 | |
| Electrical conductivity | (S/cm) | 136 | 158 | 152 | 172 | 176 | 138 | 90 |
| TMA: trimethylamine | | | | | | | | |

(Considerations regarding Examples 1 to 5 and Comparative Examples 1 to 2)

The electrical conductivity in Comparative Example 1, which used only trimethylamine, was 136 S/cm, and the

electrical conductivity in Comparative Example 2, which used only ammonia, was 90 S/cm. Therefore, it is naturally expected that if trimethylamine and ammonia are mixed and used, then a value of electrical conductivity therebetween (i.e., 90 to 136 S/cm) should be achieved.

However, in Examples 1 to 5, in which trimethylamine and ammonia were mixed and used, values of electrical conductivity of 138 to 176 S/cm were measured. These values are higher than the expected values of 90 to 136 S/cm, and in particular, in Examples 1 to 4, the values are 150 S/cm or higher, which are significantly higher. That is, in Examples 1 to 5, it was confirmed that a high electrical conductivity that could not be expected in view of the common sense is achieved.

(Examples 6 to 7)

Base-comprising aqueous solutions were prepared similarly to Example 1, except that ammonia, monomethylamine (MMA) and dimethylamine (DMA) were used in the molar ratios shown in Table 2. Aqueous solutions for forming a film were produced similarly to Example 1, except that these base-comprising aqueous solutions were used and polymer B was used instead of polymer A. Thin films were produced, and the electrical conductivity was measured.

(Comparative Example 3)

An aqueous solution for forming a film was produced similarly to Example 6, except that a base-comprising aqueous solution comprising only monomethylamine (MMA) was prepared. A thin film was produced, and the electrical conductivity was measured.

(Comparative Example 4)

An aqueous solution for forming a film was produced similarly to Example 6, except that a base-comprising aqueous solution comprising only ammonia was prepared. A thin film was produced, and the electrical conductivity was measured.

(Comparative Example 5)

An aqueous solution for forming a film was produced similarly to Example 6, except that a base-comprising aqueous solution comprising only dimethylamine (DMA) was prepared. A thin film was produced, and the electrical conductivity was measured.

[Table 2]

| | | Comparative Example 3 | Example 6 | Comparative Example 4 | Comparative Example 5 | Example 7 | Comparative Example 4 |
|---|---|---|---|---|---|---|---|
| Polymer | | B | B | B | B | B | B |
| Base | Ammonia | | 50 | 100 | | 50 | 100 |
| | MMA | 100 | 50 | | | | |
| | DMA | | | | 100 | 50 | |
| Electrical conductivity | (S/cm) | 58 | 63 | 52 | 46 | 60 | 52 |
| MMA: monomethylamine<br>DMA: dimethylamine | | | | | | | |

(Considerations regarding Examples 6 to 7 and Comparative Examples 3 to 5)

The electrical conductivity in Comparative Example 3, which used only monomethylamine, was 58 S/cm, and the electrical conductivity in Comparative Example 4, which used only ammonia, was 52 S/cm. Therefore, it is naturally expected that if monomethylamine and ammonia are mixed and used, then a value of electrical conductivity therebetween (i.e., 52 to 58 S/cm) should be achieved.

However, in Example 6, in which monomethylamine and ammonia were mixed and used, an electrical conductivity of 63 S/cm was measured. This value is significantly higher than the expected value of 52 to 58 S/cm. That is, in Example 6, it was confirmed that a significantly high electrical conductivity that could not be expected in view of the

common sense is achieved.

The electrical conductivity in Comparative Example 5, which used only dimethylamine, was 46 S/cm, and the electrical conductivity in Comparative Example 4, which used only ammonia, was 52 S/cm. Therefore, it is naturally expected that if dimethylamine and ammonia are mixed and used, a value of electrical conductivity therebetween (i.e., 46 to 52 S/cm) should be achieved.

However, in Example 7, in which dimethylamine and ammonia were mixed and used, an electrical conductivity of 60 S/cm was measured. This value is significantly higher than the expected values of 46 to 52 S/cm. That is, in Example 7, it was confirmed that a significantly high electrical conductivity that could not be expected in view of the common sense is achieved.

[Industrial Applicability]

The present invention provides a composition for molding an electrically conductive article having high electrical conductivity and a method for molding an electrically conductive article. The electrically conductive article molded using the composition of the present invention can be used as a various electrically conductive product or a member for a various electrically conductive product. The electrically conductive article can be applied in various applications such as antistatic agents, condensers, organic ELs, secondary cells, capacitors, static preventing agents, solar cells, electrode materials for a plastic electrode, EMI materials, organic ferromagnets, electrochromic materials, and various sensors.

As disclosed above, the present invention is exemplified by the use of its preferred embodiments. However, the present invention should not be interpreted to be limited to such embodiments. It is understood that the scope of the present invention should be interpreted based solely on the claims. It is understood that those skilled in the art can implement an equivalent scope, based on the descriptions of the invention and common general knowledge, from the descriptions of the specific preferred embodiments of the invention. It is understood that any patent, any patent application, and any reference cited herein should be incorporated herein by reference in the same manner as the contents are specifically described herein.

**Claims**

1. A composition which is used for molding an electrically conductive article, wherein the composition comprises a polythiophene compound, an amine compound and ammonia,

   the polythiophene compound comprises a structural unit represented by the following general formula (A):

[Chemical formula 1]

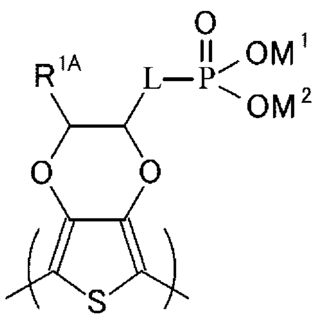

(A)

,

   wherein
   L is represented by formula (21):

[Chemical formula 21]

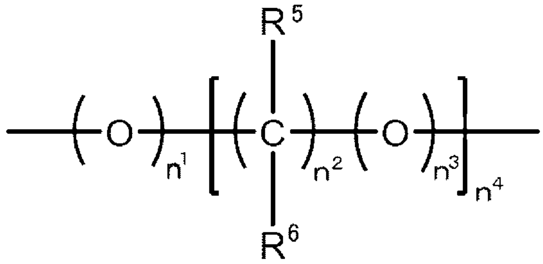

(21)

wherein $R^5$ is independently a hydrogen atom or a straight chain or branched chain alkyl group in which the number of carbon atoms is 1 to 5, $R^6$ is independently a hydrogen atom or a straight chain or branched chain alkyl group in which the number of carbon atoms is 1 to 5, $n^1$ is 0 or 1, $n^2$ is independently an integer from 1 to 6, $n^3$ is independently 0 or 1, $n^4$ is an integer from 0 to 12, and the left end of formula (21) is bound to the carbon atom in the dioxane ring in formula (A),

$M^1$ and $M^2$ are each independently an alkyl group in which the number of carbon atoms is 1 to 15, or a hydrogen atom,

$R^{1A}$ is a hydrogen atom, an alkyl group, an alkoxy group, an acyl group, or a group represented by formula (15):

[Chemical formula 15]

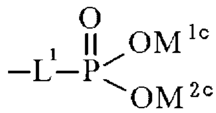

(15)

wherein $L^1$ is represented by formula (22):

[Chemical formula 22]

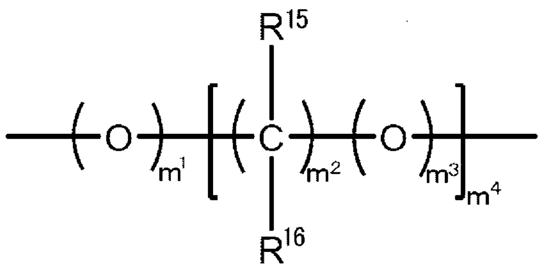

(22)

wherein $R^{15}$ is independently a hydrogen atom or a straight chain or branched chain alkyl group in which the number of carbon atoms is 1 to 5, $R^{16}$ is independently a hydrogen atom or a straight chain or branched chain alkyl group in which the number of carbon atoms is 1 to 5, $m^1$ is 0 or 1, $m^2$ is independently an integer from 1 to 6, $m^3$ is independently 0 or 1, $m^4$ is an integer from 0 to 12, and the left end of formula (22) is bound to the carbon atom in the dioxane ring in formula (A),

$M^{1c}$ and $M^{2c}$ are each independently an alkyl group in which the number of carbon atoms is 1 to 15, or a hydrogen atom,

the amine compound consists of a nitrogen atom(s), a carbon atom(s), and a hydrogen atom(s),

with the proviso that the electrically conductive article is not a member which is used in a capacitor.

2. The composition of claim 1, further comprising a solvent.

3. The composition of claim 1, wherein the amine compound has a straight chain or branched chain alkyl group in which the number of carbon atoms is 1 to 4.

4. The composition of claim 1, wherein the amine compound has one to three nitrogen atom(s).

5. The composition of claim 1, wherein the amine compound is selected from monoalkylamine, dialkylamine and

trialkylamine, wherein the alkyl group in the amine compound is a straight chain or branched chain alkyl group in which the number of carbon atoms is 1 to 4.

6. The composition of claim 1, wherein the amine compound is selected from monomethylamine, dimethylamine and trimethylamine.

7. The composition of claim 1, wherein a molar ratio of the amine compound in the total amount of the amine compound and ammonia comprised in the composition is 1 mol% to 99 mol%.

8. The composition of claim 2, wherein the solvent is water.

9. The composition of claim 1, wherein $R^{1A}$ in the polythiophene compound is hydrogen.

10. The composition of claim 9, wherein $M^1$ and $M^2$ in the polythiophene compound are hydrogen.

11. The composition of claim 9, wherein, in the polythiophene compound, $n^1$ is 0, $n^2$ is 1, $n^3$ is 0, and $n^4$ is 1.

12. An electrically conductive article which has been molded using the composition of any one of claims 1 to 11, which is not used as a member in a capacitor.

13. An electrically conductive article which has been molded using the composition of any one of claims 1 to 11, wherein the electrically conductive article is in a form of a film, with the proviso that the electrically conductive article is not used as a member in a capacitor.

14. A method of manufacturing an electrically conductive article, comprising a step of preparing the composition of any one of claims 1 to 11 and a step of molding the composition to obtain an electrically conductive article, with the proviso that the electrically conductive article is not a member that is used in a capacitor.

15. The method of claim 14, further comprising a step of polymerizing a monomer corresponding to the polythiophene compound comprised in the composition to obtain the polythiophene compound, wherein the step of obtaining the polythiophene compound is performed before the step of preparing the composition.

## INTERNATIONAL SEARCH REPORT

International application No.
**PCT/JP2024/030420**

### A. CLASSIFICATION OF SUBJECT MATTER

***C08L 65/00***(2006.01)i; ***C08K 3/28***(2006.01)i; ***C08K 5/17***(2006.01)i; ***H01B 1/12***(2006.01)i
FI: C08L65/00; C08K5/17; C08K3/28; H01B1/12 F

According to International Patent Classification (IPC) or to both national classification and IPC

### B. FIELDS SEARCHED

Minimum documentation searched (classification system followed by classification symbols)

C08L65/00-65/04; C08K3/00-13/08; C08G61/00-61/12; H01B1/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2022/260007 A1 (OSAKA UNIVERSITY) 15 December 2022 (2022-12-15) claims, examples, paragraph [0211] | 1-15 |
| A | KIRIYAMA, Kahori et al. Synthesis of Self-Doped Conductive Poly(3,4-ethylenedioxythiophene) (PEDOT) Bearing Phosphonic Acid Moieties. Bulletin of the Chemical Society of Japan. 2022, vol. 95, no. 8, pp. 1228-1233 abstract, fig. 1.(c), table 1. | 1-15 |
| A | JP 2020-105500 A (OSAKA UNIVERSITY) 09 July 2020 (2020-07-09) claims | 1-15 |
| A | JP 2018-48322 A (OSAKA UNIVERSITY) 29 March 2018 (2018-03-29) claims | 1-15 |
| A | WO 2018/123255 A1 (PANASONIC INTELLECTUAL PROPERTY MANAGEMENT CO., LTD.) 05 July 2018 (2018-07-05) claims, examples (table 1) | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/030420**

| Patent document cited in search report | Publication date (day/month/year) | Patent family member(s) | Publication date (day/month/year) |
|---|---|---|---|
| WO 2022/260007 A1 | 15 December 2022 | EP 4332146 A1<br>claims, examples, paragraph [0269]<br>CN 117561290 A<br>KR 10-2024-0021184 A | |
| JP 2020-105500 A | 09 July 2020 | (Family: none) | |
| JP 2018-48322 A | 29 March 2018 | (Family: none) | |
| WO 2018/123255 A1 | 05 July 2018 | US 2019/0287729 A1<br>claims, examples (table 1)<br>CN 110168686 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022260007 A
- JP 6912060 B